# FASCICULE DE BREVET EUROPEEN

(11) **EP 3 550 957 B1**
(45) Date de publication et mention de la délivrance du brevet: **17.03.2021**
(21) Numéro de dépôt: 17823057.9
(22) Date de dépôt: 08.12.2017
(51) Int. Cl.: A01F 25/20

(54) **GODET DE DESILAGE EQUIPE D'UN MOYEN DE SEPARATION ET DE DEVERSEMENT DE LA MATIERE**
SILOENTLADERSCHAUFEL MIT EINER VORRICHTUNG ZUM TRENNEN UND ENTLADEN VON MATERIAL
SILO UNLOADER BUCKET EQUIPPED WITH A MEANS FOR SEPARATING AND DISCHARGING MATERIAL

(30) Priorité: 12.12.2016 FR 1662329
(43) Date de publication de la demande: 16.10.2019
(73) Titulaire: Etablissements Emily, 29800 Tréflévénez (FR)
(72) Inventeur: RUNGOAT, David, 29800 Tréflévénez (FR); GUENGANT, Michel, 29440 Plougar (FR); MIOSSEC, Arnaud, 29440 Plouzevede (FR); PODEUR, François, 29800 Pencran (FR)
(74) Mandataire: Cabinet Le Guen Maillet
(86) Numéro de dépôt international: PCT/EP2017/081982
(87) Numéro de publication internationale: WO 2018/108731

(56) Documents cités:
- EP-A1- 2 484 837
- EP-A2- 0 506 158
- DE-A1- 1 531 933
- DE-A1- 2 750 525

## Description

La présente invention concerne un godet de désilage destiné à être attelé à un engin pour découper de la matière dans un silo ou trancher une botte de fourrage, et la charger pour la transporter.

Pour prendre de la matière stockée dans un silo, par exemple un silo de fourrage compacté à base de maïs, mais surtout à base d'herbe, il est connu d'utiliser un godet attelé à un engin tel qu'un tracteur, un chargeur, pour le transporter et le faire fonctionner. Le godet est amené devant le silo pour être rempli de matière. Un tel godet comprend une benne de chargement ouverte dans sa partie haute, en considérant sa position de transport qui est pourvue d'un organe de désilage. Dans un mode de réalisation particulier, cet organe de désilage se compose de deux bras montés de manière articulée sur la benne, par l'intermédiaire de deux vérins hydrauliques susceptibles d'être alimentés par le circuit hydraulique du tracteur et qui portent en leurs deux extrémités libres, un berceau en forme de C. Un organe de coupe est monté sous le berceau, comprenant au moins une lame de coupe.

Le conducteur du tracteur déplace le godet attelé devant le silo ouvert, bascule le godet pour que son ouverture de chargement soit tournée en vis-à-vis du silo. Il commande la descente du berceau. La lame coupe une tranche de matière dans le front du silo. La matière découpée dans la partie haute du front de coupe tombe dans la benne. Dans la partie basse du silo, la matière découpée demeure fréquemment collée sur le front de coupe, au-dessus du berceau. Il faut alors remonter le berceau, puis avancer le godet, le relever, pour ramasser la matière déposée au pied de son front de coupe. Il reste pratiquement toujours de la matière au pied du front de coupe du silo.

On connaît encore à la lecture du brevet EP-A2-0 506 158, un dispositif de reprise, de transport et de manipulation de fourrage. Le dispositif comprend un récipient en forme de boîte pourvu d'un ou de plusieurs convoyeurs sans fin en plus d'un élément destiné à fractionner le fourrage en portions à l'aide de trois scies, hors du silo, et au moins un bras pivotant par rapport au récipient en forme de boîte et sur l'extrémité duquel est disposé l'élément de fractionnement avec ses trois scies. Le récipient en forme de boîte comporte un moyen de prélèvement, de préférence en forme d'un élément analogue à un volet, pour prélever chaque portion séparée et pour ensuite l'introduire dans le récipient en forme de boîte, dans lequel les portions sont malaxées.

Aussi, connaissant cet état de la technique le demandeur a cherché à concevoir un godet de désilage qui puisse être rempli beaucoup plus facilement.

Un second but de l'invention est de limiter autant que possible la hauteur du godet dans sa position de transport.

A cet effet, est proposé un godet de désilage destiné à être attelé à un engin de manutention pour découper une matière dans un silo ou trancher une botte de fourrage et la charger pour la transporter, comprenant :
- une benne de chargement délimitée par des parois, une ouverture de chargement,
- un berceau de géométrie en C porté par deux bras montés à pivotement sur ladite benne à l'encontre d'au moins un organe de manœuvre, devant son ouverture de chargement,
- un organe de sciage de la matière, de la botte, fixé sous le berceau ; selon l'invention, le godet de désilage comporte un moyen de séparation et de déversement monté transversalement et de manière articulée sur le berceau et du côté opposé à l'organe de sciage,
le moyen de séparation et de déversement étant mobile entre une position ouverte de collecte pour glisser le long du front de coupe dans le silo ou dans la botte et collecter du côté de la benne une tranche de matière découpée par l'organe de sciage, le godet de désilage étant basculé dans une position de chargement, et une position de fermeture où il est rabattu vers la benne pour déverser son contenu dans la benne, le godet de désilage étant basculé dans une position de transport.

Pendant la descente du berceau notamment, le moyen de séparation et de déversement bascule vers sa position de décollement. L'organe de sciage découpe une tranche de matière dans le front du silo, dans la botte de fourrage et le moyen de séparation et de déversement sépare et collecte la matière découpée du front de coupe du silo, de la botte de fourrage. La matière découpée demeure du côté de la benne du godet.

Pendant le basculement du godet vers sa position de transport, le moyen de séparation et de déversement bascule vers sa position de rabattement. La matière collectée est alors déversée dans la benne. Le godet est rempli beaucoup plus facilement. Sa hauteur hors tout, dans sa position de transport, est relativement faible.

Selon une caractéristique additionnelle de l'invention, le berceau comprend une paroi intermédiaire transversale et le moyen de séparation et de déversement comporte une paroi frontale montée transversalement et de manière articulée au niveau du champ longitudinal supérieur de ladite paroi intermédiaire transversale, le champ longitudinal inférieur de ladite paroi intermédiaire transversale portant une scie constitutive de l'organe de sciage.

Pendant la descente du berceau, la scie coupe une tranche de matière, puis la paroi frontale maintient la matière décollée du front de coupe qui demeure du côté de la benne du godet.

Selon une caractéristique additionnelle de l'invention, la paroi frontale est constituée d'une plaque qui présente en section transversale, une géométrie en portion de cercle dont le rayon est centré de manière pratiquement coaxiale autour de l'axe d'articulation du berceau, dans sa position ouverte de collecte.

La plaque arrondie de la paroi frontale suit parfaitement la trajectoire en portion de cercle de la scie. Le front de coupe du silo demeure propre et lisse.

En variante de réalisation, la paroi frontale est constituée d'une fourche dont les doigts sont incurvés suivant un rayon centré de manière pratiquement coaxiale autour de l'axe d'articulation du berceau, dans sa position ouverte de collecte, les doigts étant suffisamment rapprochés pour empêcher la matière découpée de traverser ladite fourche.

La fourche arrondie de la paroi frontale suit parfaitement la trajectoire en portion de cercle de la scie. Le front de coupe du silo demeure propre et lisse.

Selon une caractéristique additionnelle de l'invention, la paroi intermédiaire transversale est prolongée perpendiculairement à ses deux extrémités par deux parois latérales reliées aux deux bras et les deux parois latérales portent respectivement sur leur champ longitudinal inférieur, une seconde scie, une troisième scie, prolongeant la première scie à ses deux extrémités, l'axe d'articulation du moyen de séparation et de déversement étant tenu entre les deux parois latérales.

La scie principale, ainsi que les deux scies additionnelles, coupent la largeur ainsi que les deux flancs de la tranche de matière. Le moyen de séparation et de déversement est mécaniquement tenu par les deux extrémités de son axe d'articulation.

Selon une caractéristique additionnelle de l'invention, la paroi frontale est bordée de ses deux côtés latéraux, par deux joues de guidage de la matière, qui s'étendent perpendiculairement à ladite paroi frontale et dans la même direction.

Les deux joues de guidage canalisent latéralement la matière découpée.

Selon une caractéristique additionnelle de l'invention, le godet de désilage comprend une butée angulaire limitant l'excursion du moyen de séparation et de déversement entre ses deux positions remarquables de collecte et de rabattement.

Le moyen de séparation et de déversement peut librement être orienté entre ses deux positions extrêmes suivant la position du berceau, l'action de la matière sur ledit moyen de séparation et de déversement.

Selon une caractéristique additionnelle de l'invention, la benne comporte des parois latérales, une paroi de fond, au moins l'une des parois latérales est traversée d'une ouverture de déchargement pour permettre la vidange de son contenu et un moyen de déchargement est disposé contre la paroi de fond pour évacuer la matière contenue dans la benne, au travers de l'ouverture de déchargement.

En faisant fonctionner le moyen de déchargement, on peut ainsi vidanger le contenu de la benne du godet.

Selon une caractéristique additionnelle de l'invention, la benne comporte une paroi dorsale et le godet comprend un rotor de démêlage fixé sur ladite paroi dorsale et à proximité de l'ouverture de déchargement pour réguler, pendant sa rotation, le débit de distribution de la matière au travers de ladite ouverture de déchargement.

Le rotor de démêlage régule, pendant son fonctionnement et celui du moyen de déchargement, le débit de vidange du godet.

Selon une caractéristique additionnelle de l'invention, le godet de désilage comprend un organe de manœuvre attelé sur le moyen de séparation et de déversement pour le faire basculer autour de son axe d'articulation entre sa position de collecte et sa position de rabattement.

L'inclinaison du moyen de séparation et de déversement peut être réglée en commandant le fonctionnement de l'organe de manœuvre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en perspective trois/quart avant d'un godet de désilage dans une position basculée de chargement selon l'invention,
la Fig. 2 représente une vue en perspective trois/quart avant d'un godet de désilage et dont le moyen de séparation et de déversement qu'il comporte est disposé dans une position de collecte selon l'invention,
la Fig. 3 représente une vue en perspective trois/quart avant d'un godet de désilage dont le moyen de séparation et de déversement est disposé dans une position de rabattement selon l'invention,
la Fig. 4 représente une vue latérale schématique d'un godet de désilage dans sa position basculée de chargement dont l'organe de sciage qu'il comporte est dans une phase d'approche pour découper une tranche de matière dans le front d'un silo de fourrage selon l'invention,
la Fig. 5 représente une vue latérale schématique d'un godet de désilage dont l'organe de sciage est dans une phase de début de découpe d'une tranche de matière dans le front d'un silo de fourrage selon l'invention
la Fig. 6 représente une vue latérale schématique d'un godet de désilage dont l'organe de sciage est dans une phase intermédiaire de découpe d'une tranche de matière dans le front d'un silo de fourrage selon l'invention,
la Fig. 7 représente une vue latérale schématique d'un godet de désilage dont l'organe de sciage est dans une phase finale de découpe d'une tranche de matière dans le front d'un silo de fourrage selon l'invention,
la Fig. 8 représente une vue latérale schématique d'un godet de désilage basculé dans sa position de transport selon l'invention dont le moyen de séparation et de déversement bascule vers sa position de rabattement,
la Fig. 9 représente une vue latérale schématique d'un godet de désilage dans sa position de transport selon l'invention et,
la Fig. 10 représente une vue latérale schématique d'un godet de désilage dans sa position basculée de chargement dont l'organe de sciage est dans une phase d'approche pour trancher une botte de fourrage selon l'invention.

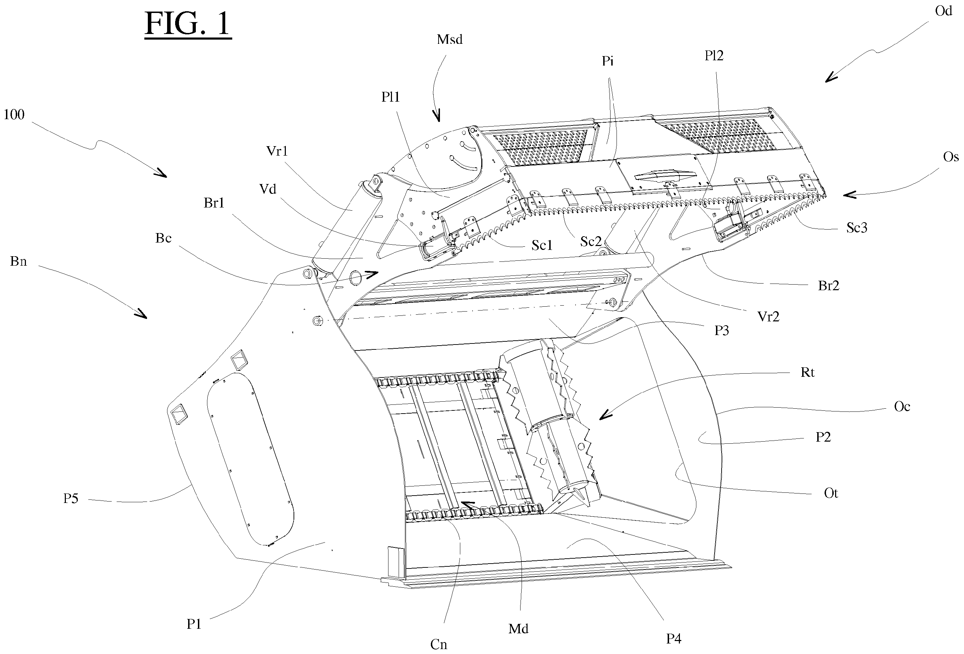

Le godet 100 de désilage présenté sur la Fig. 1, est destiné lorsqu'il est attelé à un engin de manutention, à découper de la matière notamment stockée dans un silo, pour la charger et la transporter. Il est présenté dans sa position basculée de chargement de la matière.

Le godet 100 de désilage se compose d'une benne Bn destinée à contenir et transporter de la matière, d'un moyen attelage, non représenté, prévu pour être monté sur l'attelage correspondant de l'engin de manutention pour le manœuvrer et le faire fonctionner, d'un organe de désilage Od conçu pour découper une tranche de matière dans le silo, d'un moyen de séparation et de déversement Msd conçu pour décoller la tranche découpée dans le silo et pour déverser dans la benne, la matière découpée.

La benne Bn est délimitée par une pluralité de parois P bordant une ouverture Oc de chargement. On dénombre sur cette Fig. 1, cinq parois principales : deux parois latérales P1 et P2, une paroi dorsale P3, une paroi frontale P4 ainsi qu'une paroi de fond P5 réunissant les autres parois P1-P4. L'ouverture Oc de chargement est tournée vers le silo pendant la découpe de la matière et son chargement dans la benne Bn.

L'organe de désilage Od comprend, un organe de sciage Os porté par un berceau Bc constitué de parois, et plus précisément, d'une paroi intermédiaire transversale Pi prolongée à ses deux extrémités par deux parois latérales Pl1, Pl2 et qui présentent une géométrie en U en vue de dessus. L'organe de désilage Od est tenu par ses deux parois latérales Pl1, Pl2, respectivement par deux bras Br montés de manière articulée sur le godet 100 de désilage et sur cette Fig. 1, sur les faces internes des deux parois latérales P1, P2, de la benne Bn.

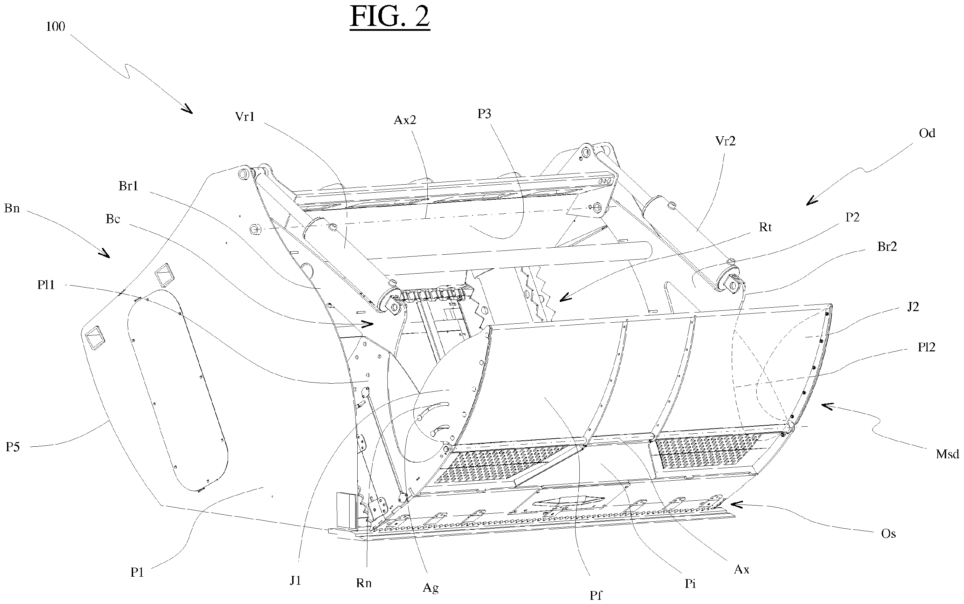

Deux organes de manœuvre, tels que deux vérins hydrauliques Vr1 et Vr2 sont respectivement reliés entre les deux bras Br et le godet 100 de désilage et sur cette Fig. 1, sur les deux parois latérales P1, P2, de la benne Bn. Ils servent à manœuvrer l'organe de sciage Os, devant l'ouverture de chargement Oc de la benne Bn, entre une position de dégagement visible sur la Fig. 1 où l'organe de sciage Os est disposé globalement dans le prolongement de sa paroi dorsale P3 et une position de fermeture visible sur la Fig. 2 où l'organe de sciage Os est disposé pratiquement au niveau du bord libre de la paroi frontale de la benne Bn. Les vérins hydrauliques sont raccordés à un distributeur hydraulique pouvant être alimenté par le circuit hydraulique de l'engin de manutention.

L'organe de sciage Os comprend, sur la Fig. 1, trois scies Sc1, Sc2 et Sc3, qui sont disposées respectivement sous les trois parois Pl1, Pi, Pl2, constitutives du berceau Bc et plus précisément dans le prolongement de leurs champs longitudinaux inférieurs, sur cette Fig. 1. Les scies mobiles sont montées à coulissement suivant un mouvement alternatif en étant guidées dans des glissières fixées sur lesdites parois. Chaque scie Sc est reliée à un vérin Vd à double effet pour l'entraîner alternativement en translation. Des scies fixes, non visibles, sont fixées sur les faces internes des trois parois Pl1, Pi, Pl2 et en jouxtant les scies mobiles Sc. En fonctionnement, les scies sont capables de découper une tranche de matière dans un silo, pendant l'abaissement des bras Br de manœuvre de l'organe de désilage Od.

Dans l'invention, un moyen de séparation et de déversement Msd est monté librement de manière articulée sur la partie haute du berceau Bc, c'est-à-dire à l'opposé de l'organe de sciage Os. Sur la Fig. 2, et de manière plus précise, le moyen de séparation et de déversement Msd est monté de manière articulée au niveau de sa partie basse entre les deux parois latérales Pl1, P12, constitutives du berceau. L'axe Ax de l'articulation du moyen de séparation et de déversement Msd est disposé pratiquement dans le prolongement de la paroi intermédiaire Pi, c'est-à-dire qu'il jouxte le champ longitudinal supérieur de ladite paroi intermédiaire.

Le moyen de séparation et de déversement Msd est constitué d'une paroi frontale Pf qui est bordée de ses deux côtés latéraux par deux joues J1 et J2 de guidage de la matière, qui s'étendent perpendiculairement à ladite paroi frontale et dans la même direction. Les deux joues de guidage J1 et J2 servent à canaliser latéralement la matière découpée dans le moyen de séparation et de déversement Msd.

La paroi frontale Pf du moyen de séparation et de déversement Msd est de préférence pleine pour glisser sur le front de coupe sans arracher la matière. Elle peut cependant être ajourée localement, comme cela apparaît sur cette Fig. 2, pour permettre au conducteur de l'engin de voir au travers afin de faciliter la conduite de l'engin de manutention. La paroi frontale Pf peut être constituée d'un seul élément ou de plusieurs éléments jointifs.

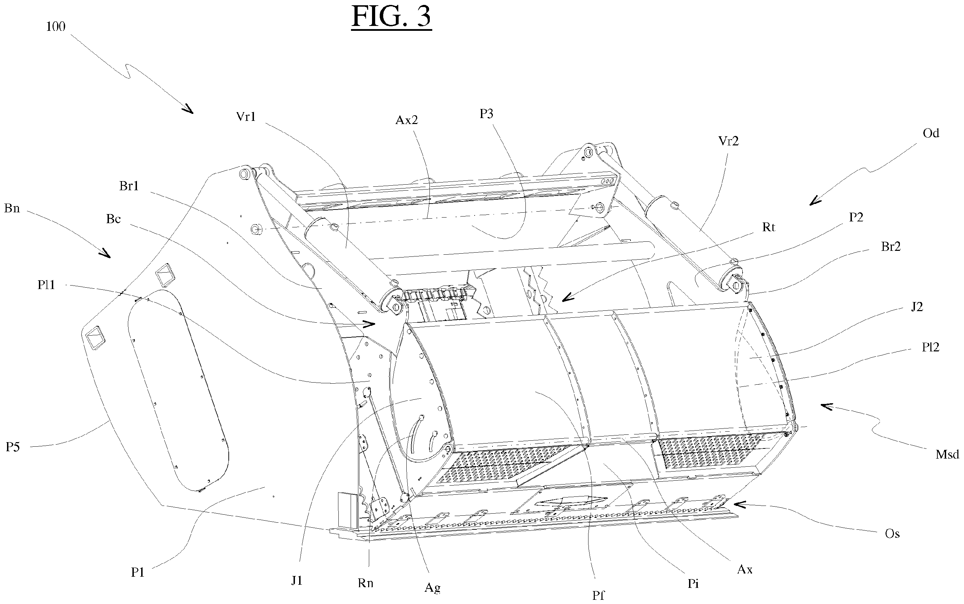

Le moyen de séparation et de déversement Msd est monté de manière articulée pour pivoter entre une première position de collecte, visible sur cette Fig. 2, où sa paroi frontale Pf prolonge pratiquement la paroi intermédiaire Pi et une seconde position de rabattement, visible sur la Fig. 3, ainsi que sur la Fig. 1, où sa paroi frontale Pf est repliée vers l'intérieur du godet. L'angle formé entre les deux positions remarquables du moyen de séparation et de déversement Msd est compris pratiquement entre 30 degrés et 75 degrés. Une valeur préférentielle de cet angle est de pratiquement 50 degrés. Le basculement du moyen de séparation et de déversement Msd se réalise quand son centre de gravité bascule d'un bord ou de l'autre de son axe Ax, c'est-à-dire pendant la descente du berceau Bc, pendant la remontée du berceau Bc. Pendant le fonctionnement du godet, la tranche de matière découpée dans un silo agit également sur la paroi frontale Pf du moyen de séparation et de déversement pour le faire basculer vers sa position de collecte.

Une butée angulaire limite l'excursion du moyen de séparation et de déversement Msd entre ses deux positions remarquables. La butée angulaire est constituée, sur la Fig. 2, d'au moins une rainure Rn en forme de portion de cercle qui est réalisée au travers d'au moins une joue J du moyen de séparation et de déversement Msd et qui peut coulisser autour d'un axe de guidage Ag fixé au travers d'une paroi latérale Pl correspondante de l'organe de désilage.

Dans un mode de réalisation avantageux, la paroi frontale Pf du moyen de séparation et de déversement Msd présente en section transversale une géométrie en portion de cercle, identifiable sur cette Fig. 2, dont le rayon est centré de manière pratiquement coaxiale autour de l'axe d'articulation Ax2 du berceau Bc. Elle peut ainsi glisser sur le front de coupe en contenant la tranche découpée du côté de la benne du godet et sans arracher la matière. Le front de coupe demeure propre et lisse. La matière stockée dans le silo se conserve mieux.

La paroi frontale Pf du moyen de séparation et de déversement Msd est pourvue de profilés de renfort transversaux destinés à la renforcer et qui tiennent également son axe Ax d'articulation pour réduire sa déformation en fonctionnement. La paroi frontale Pf est pleine sur cette Fig. 2. Elle peut cependant être ajourée localement pour permettre au conducteur de l'engin de voir au travers afin de faciliter la conduite de l'engin de manutention.

Dans une variante de réalisation non représentée, la paroi frontale prend la forme d'une fourche comprenant des doigts incurvés qui sont disposés parallèlement les uns aux autres et dont le rayon de courbure est centré de manière pratiquement coaxiale autour de l'axe d'articulation du berceau. Les doigts de la fourche sont suffisamment rapprochés pour éviter que la matière découpée ne traverse ladite fourche. La fourche peut ainsi glisser sur le front de coupe du silo en contenant la tranche découpée du côté de la benne du godet et sans arracher la matière.

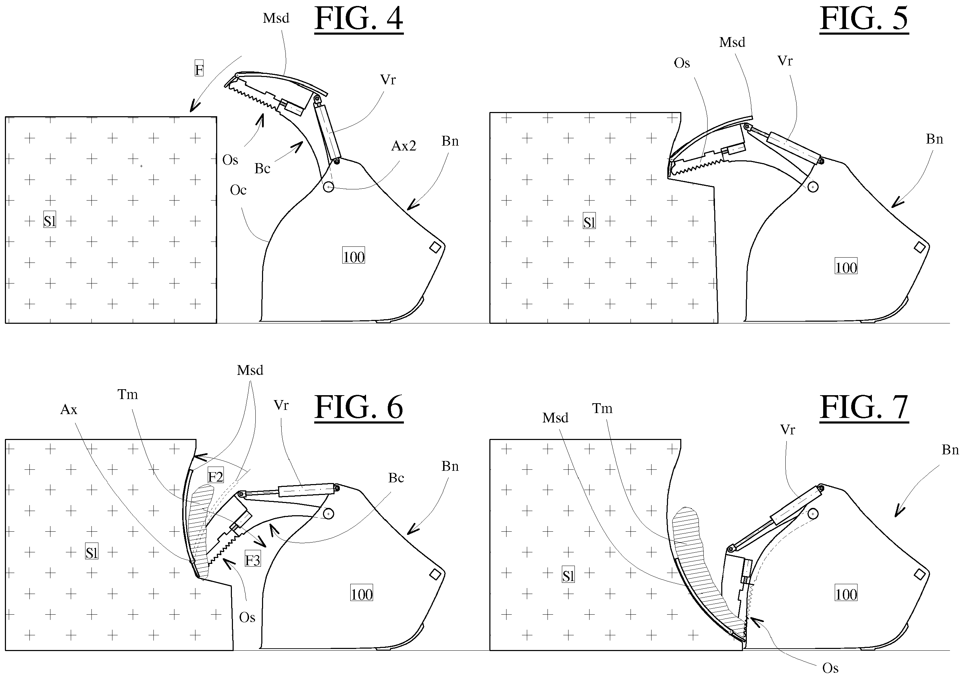

Le fonctionnement du godet de désilage de l'invention se présente de la façon suivante, en référence aux Figs. 4 à 9. Le godet de désilage 100 est représenté sans l'engin de manutention chargé de le déplacer et de le faire fonctionner.

Sur la Fig. 4, le godet de désilage 100 est basculé dans sa position de chargement. Il est disposé devant un silo pour découper une tranche de matière dans le front du silo. Le moyen de séparation et de déversement Msd demeure basculé dans sa position de rabattement, sous l'effet de la gravité.

L'ouverture de chargement Oc de la benne Bn est tournée vers ledit silo. L'organe de sciage Os est disposé dans sa position de dégagement où il est relevé. Il est mis en fonctionnement et le berceau Bc est abaissé autour de son axe Ax2 sous l'effet de la manœuvre des vérins Vr, comme le suggère la flèche F. L'organe de sciage Os est également mis en fonctionnement.

Sur la Fig. 5, l'organe de sciage Os commence la découpe d'une tranche de matière dans le silo S1. Le moyen de séparation et de déversement Msd demeure dans sa position de rabattement. La tranche de matière découpée glisse sur la face interne de la paroi frontale du moyen de séparation et de déversement Msd et tombe dans la benne Bn du godet de désilage.

Sur la Fig. 6, l'organe de sciage Os a poursuivi la découpe de la tranche de matière Tm dans le silo Sl en se dirigeant vers la partie basse du silo Sl. Le berceau Bc est dans une position inclinée vers le bas et le moyen de séparation et de déversement Msd s'approche d'une position verticale d'équilibre autour de son axe Ax. La tranche de matière Tm en cours de formation et découpée par l'organe de sciage Os, glisse sur la face interne de la paroi frontale du moyen de séparation et de déversement Msd pour l'ouvrir, par la pression qu'elle exerce, vers sa position de collecte, pendant le mouvement de descente du berceau Bc. Le moyen de séparation et de déversement Msd finit alors par basculer vers sa position de collecte, comme le suggère la flèche F2. Le berceau Bc poursuit son mouvement de descente. Une partie de la tranche de matière Tm commence alors à s'effondrer et retombe à l'intérieur de la benne Bn du godet, comme le suggère la flèche F3.

Sur la Fig. 7, l'organe de sciage Os est sur le point d'atteindre sa position de fermeture en se dirigeant vers la partie basse du silo S1. La partie de la tranche de matière Tm qui ne s'est pas effondrée repose alors sur la face interne de la paroi frontale du moyen de séparation et de déversement Msd.

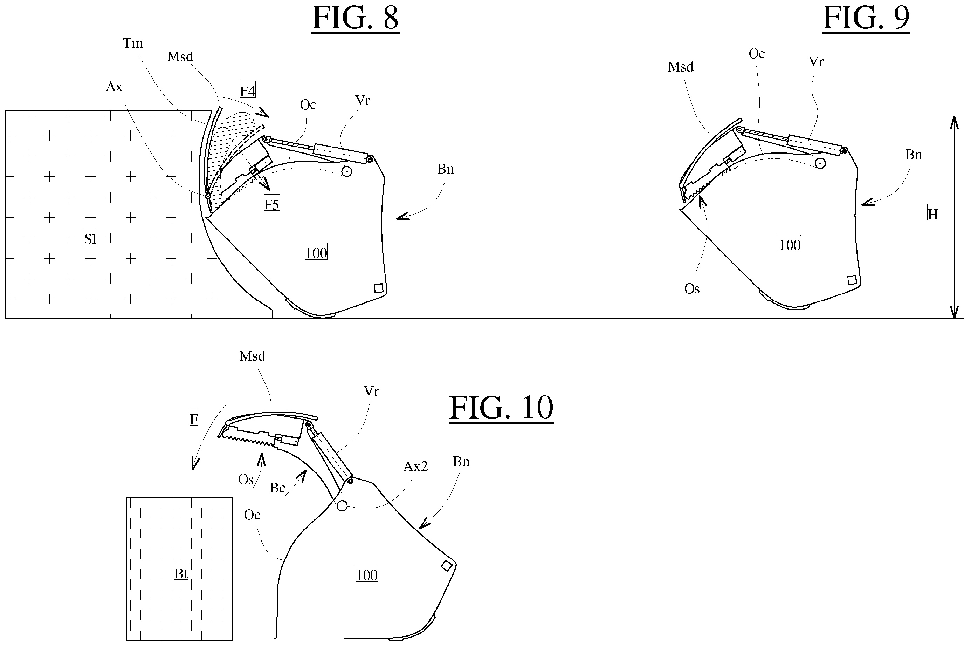

Sur la Fig. 8, le godet de désilage étant rempli, le conducteur de l'engin fait reculer un peu celui-ci et commande le basculement du godet vers sa position de transport où son ouverture de chargement Oc est sensiblement tournée vers le haut. Au cours de ce basculement, le berceau bascule aussi vers le haut, de sorte que le centre de gravité du moyen de séparation et de déversement Msd bascule de l'autre côté de son axe Ax d'articulation. Le moyen de séparation et de déversement Msd bascule alors vers sa position de rabattement, comme le suggère la flèche F4, entraînant alors le reste de la tranche de matière qui s'effrite et tombe à l'intérieur de la benne Bn, comme le suggère la flèche F5.

La matière découpée par l'organe de sciage est recueillie directement dans la benne du godet de désilage. Il n'est plus nécessaire de le manœuvrer pour ramasser la matière retombée au pied du silo. Le fonctionnement du moyen de séparation et de déversement Msd facilite le travail du conducteur de l'engin de manutention.

Sur la Fig. 9, le godet de désilage 100 rempli est présenté dans sa position de transport avec son ouverture de chargement Oc tourné vers le haut.

Tel quel, le godet de désilage de l'invention peut être utilisé par le conducteur de l'engin de manutention pour découper une ou plusieurs tranches de matière dans un silo afin de remplir son godet.

Le conducteur déplace ensuite l'engin porteur pour amener le godet de désilage vers un lieu de vidange. Il peut ainsi vidanger le godet, par basculement, pour déverser le contenu de sa benne dans une remorque, par exemple, une remorque mélangeuse.

Le godet de désilage 100 de l'invention peut être considéré comme efficace dans la mesure où le remplissage de sa benne est rapide et simple à mettre en œuvre. En effet, le basculement du moyen de séparation et de déversement vers sa position de rabattement envoi la matière vers l'intérieur de la benne du godet. Le fonctionnement du moyen de séparation et de déversement aide le conducteur de l'engin à remplir la benne du godet.

Le godet de désilage de l'invention peut être équipé d'accessoires destinés à mettre en œuvre la vidange de son contenu.

Sur la Fig. 1, au moins l'une, P2, des parois latérales P de la benne Bn est traversée d'une ouverture de déchargement Ot pour permettre la vidange de son contenu. Le godet 100 de désilage peut avantageusement être équipé d'un moyen de déchargement Md de son contenu pour le vider de la matière qu'il contient. Le moyen de déchargement Md du contenu est disposé contre la paroi de fond P5 pour évacuer la matière contenue dans la benne Bn, au travers de l'ouverture de déchargement Ot.

Le moyen de déchargement Md du contenu comprend, sur cette Fig. 1, un convoyeur Cn à chaînes pourvues de tasseaux d'entraînement de la matière, susceptibles d'être entraînés en boucle, sur la paroi de fond de la benne, en circulant autour de deux axes équipés respectivement de deux pignons d'entraînement. L'un des axes est moteur en étant accouplé, par exemple, à un motoréducteur hydraulique d'entraînement à rotation dudit axe d'entraînement pour faire circuler en boucle les chaînes pourvues des tasseaux d'entraînement de la matière sur la paroi de fond de la benne.

Un moyen d'obturation, tel qu'une trappe de fermeture, non visible sur cette vue de trois/quart, est monté de manière articulée sur le godet entre une position de fermeture de l'ouverture de déchargement Ot pour contenir la matière à l'intérieur de la benne quand elle n'est pas distribuée et une position d'ouverture permettant la vidange de ladite benne. L'axe d'articulation de la trappe de fermeture est disposé sous l'ouverture de déchargement Ot pour qu'elle puisse servir de goulotte dans sa position d'ouverture. La trappe est reliée à un organe de manœuvre, tel qu'un vérin hydraulique pour la manœuvrer

La benne du godet peut être vidangée latéralement, en particulier, dans une auge, dans une mangeoire.

Dans une variante de réalisation, le moyen de déchargement du contenu de la benne comprend un tapis roulant à barrettes, susceptible d'être entraîné en boucle autour de deux tambours et dont l'un est moteur.

Un rotor de démêlage Rt breveté par le demandeur sous le n° FR3036251 et fixé sur la paroi dorsale P3 et à proximité de l'ouverture de déchargement Ot pour réguler, pendant sa rotation, le débit de distribution de la matière au travers de ladite ouverture de déchargement.

On remarquera sur la Fig. 9 que, dans la position de transport du godet de désilage, le moyen de séparation et de déversement Msd demeure basculé dans sa position de rabattement. De ce fait, la hauteur H du godet 100 de désilage est à peine supérieure à la hauteur de sa benne Bn. Il peut être acheminé à l'intérieur de bâtiments dont la hauteur du porche d'accès est relativement basse, et qui peut être inférieure à 2 mètres, pour un godet de désilage de petit gabarit.

Par ailleurs, le front de coupe du silo demeure propre et lisse, favorisant la conservation du fourrage.

Dans une variante de réalisation, non représentée, le mouvement de basculement du moyen de séparation et de déversement autour de son axe d'articulation, entre sa position de collecte et sa position de rabattement, est mis en œuvre par l'intermédiaire d'un organe de manœuvre. Celui-ci est interposé entre le berceau et le moyen de séparation et de déversement. Il est raccordé à un distributeur hydraulique pouvant être alimenté par le circuit hydraulique de l'engin.

Dans ces conditions, c'est le conducteur de l'engin qui commande la manœuvre du moyen de séparation et de déversement pour l'ouvrir vers sa position de collecte ou la refermer vers sa position de rabattement.

Le godet de désilage de l'invention peut aussi être utilisé pour couper en au moins deux tranches, une botte de fourrage déposée sur le sol, par exemple, en la coupant en deux. Le conducteur de l'engin de manutention déplace le godet et le bascule dans sa position de chargement, devant une botte de fourrage.

Cette situation est présentée sur la Fig. 10. Le godet de désilage 100 s'apprête à trancher une botte Bt de fourrage pour la charger et la déposer, par exemple dans une remorque, par exemple, une remorque mélangeuse. Le fonctionnement du godet équipé de son moyen de séparation et de déversement est identique à celui décrit pour découper dans un silo une tranche de matière et la charger dans la benne du godet.

## Revendications

1. Godet (100) de désilage destiné à être attelé à un engin de manutention pour découper une matière dans un silo (S1) ou trancher une botte (Bt) de fourrage et la charger pour la transporter, comprenant :
- une benne (Bn) de chargement délimitée par des parois, une ouverture de chargement (Oc),
- un berceau (Bc) de géométrie en C porté par deux bras (Br) montés à pivotement sur ladite benne à l'encontre d'au moins un organe de manœuvre (Vr), devant son ouverture de chargement (Oc),
- un organe de sciage (Os) de la matière, de la botte (Bt), fixé sous le berceau,
- un moyen de séparation et de déversement (Msd) monté transversalement et du côté opposé à l'organe de sciage (Os), **caractérisé en ce que** le moyen de séparation et de déversement (Msd) est monté de manière articulée sur le berceau (Bc) et **en ce que** le moyen de séparation et de déversement (Msd) est mobile entre une position ouverte de collecte pour glisser le long du front de coupe dans le silo (S1) ou dans la botte (Bt) et collecter du côté de la benne (Bn) une tranche de matière découpée par l'organe de sciage (Os), le godet de désilage (100) étant basculé dans une position de chargement, et une position de fermeture où il est rabattu vers la benne (Bn) pour déverser son contenu dans la benne (Bc), le godet de désilage (100) étant basculé dans une position de transport.

2. Godet (100) de désilage selon la revendication 1, **caractérisé en ce que** le berceau (Bc) comprend une paroi intermédiaire (Pi) transversale et **en ce que** le moyen de séparation et de déversement (Msd) comporte une paroi frontale (Pf) montée transversalement et de manière articulée au niveau du champ longitudinal supérieur de ladite paroi intermédiaire (Pi) transversale, le champ longitudinal inférieur de ladite paroi intermédiaire (Pi) transversale portant une scie (Sc2) constitutive de l'organe de sciage (Os).

3. Godet (100) de désilage selon la revendication 2, **caractérisé en ce que** la paroi frontale (Pf) est constituée d'une plaque qui présente en section transversale, une géométrie en portion de cercle dont le rayon est centré de manière pratiquement coaxiale autour de l'axe d'articulation (Ax2) du berceau (Bc), dans sa position ouverte de collecte.

4. Godet (100) de désilage selon la revendication 2, **caractérisé en ce que** la paroi frontale (Pf) est constituée d'une fourche dont les doigts sont incurvés suivant un rayon centré de manière pratiquement coaxiale autour de l'axe d'articulation (Ax2) du berceau (Bc), dans sa position ouverte de collecte, les doigts étant suffisamment rapprochés pour empêcher la matière découpée de traverser ladite fourche.

5. Godet (100) de désilage selon la revendication 2, 3 ou 4, **caractérisé en ce que** la paroi intermédiaire (Pi) transversale est prolongée perpendiculairement à ses deux extrémités par deux parois latérales (Pl1, Pl2) reliées aux deux bras (Br1, Br2) et **en ce que** les deux parois latérales (Pl1, Pl2) portent respectivement sur leur champ longitudinal inférieur, une seconde scie (Sc1), une troisième scie (Sc3), prolongeant la première scie (Sc2) à ses deux extrémités, l'axe (Ax) d'articulation du moyen de séparation et de déversement (Msd) étant tenu entre les deux parois latérales (Pl1, Pl2).

6. Godet (100) de désilage selon l'une quelconque des revendications 2 à 5, **caractérisé en ce que** la paroi frontale (Pf) est bordée de ses deux côtés latéraux, par deux joues (J1, J2) de guidage de la matière, qui s'étendent perpendiculairement à ladite paroi frontale et dans la même direction.

7. Godet (100) de désilage selon l'une quelconque des revendications précédentes, **caractérisé en ce qu'**il comprend une butée angulaire (Rn, Ag) limitant l'excursion du moyen de séparation et de déversement (Msd) entre ses deux positions remarquables de collecte et de rabattement.

8. Godet (100) de désilage selon l'une quelconque des revendications précédentes, **caractérisé en ce que** la benne (Bn) comporte des parois latérales (P1, P2), une paroi de fond (P5), au moins l'une, (P2), des parois latérales (P) est traversée d'une ouverture de déchargement (Ot) pour permettre la vidange de son contenu et **en ce qu'**un moyen de déchargement (Md) est disposé contre la paroi de fond (P5) pour évacuer la matière contenue dans la benne (Bn), au travers de l'ouverture de déchargement (Ot).

9. Godet (100) de désilage selon la revendication 8, **caractérisé en ce que** la benne (Bn) comporte une paroi dorsale (P3) et **en ce que** le godet (100) comprend un rotor de démêlage (Rt) fixé sur ladite paroi dorsale et à proximité de l'ouverture de déchargement (Ot) pour réguler, pendant sa rotation, le débit de distribution de la matière au travers de ladite l'ouverture de déchargement.

10. Godet (100) de désilage selon l'une quelconque des revendications 5 à 9, **caractérisé en ce qu'**il comprend un organe de manœuvre attelé sur le moyen de séparation et de déversement (Msd) pour le faire basculer autour de son axe (Ax) d'articulation entre sa position de collecte et sa position de rabattement.

## Patentansprüche

1. Siloentladerschaufel (100), die dazu bestimmt ist, an ein Fördermittel angehängt zu werden, um ein Material in einem Silo (S1) abzuschneiden oder ein Futterbündel (Bt) durchzuschneiden und es für seinen Transport zu laden, umfassend:
- eine Lademulde (Bn), die von Wänden und einer Ladeöffnung (Oc) begrenzt wird,
- ein Gestell (Bc) mit C-förmiger Geometrie, das von zwei Armen (Br) getragen wird, die schwenkend an der Mulde gegenüber mindestens einem Manövrierglied (Vr) vor ihrer Ladeöffnung (Oc) montiert sind,
- ein Glied (Os) zum Sägen des Materials, des Bündels (Bt), wobei das Glied unter dem Gestell befestigt ist,
- ein Trenn- und Auskippmittel (Msd), das quer zu dem Sägeglied (Os) und an dessen gegenüberliegender Seite montiert ist, **dadurch gekennzeichnet, dass** das Trenn- und Auskippmittel (Msd) gelenkig an dem Gestell (Bc) montiert ist und dass das Trenn- und Auskippmittel (Msd) zwischen einer offenen Aufnahmeposition, um entlang der Hiebsfront in dem Silo (S1) oder in dem Bündel (Bt) zu gleiten und um mit der Mulde (Bn) einen mittels des Sägeglieds (Os) abgeschnittenen Materialabschnitt aufzunehmen, wobei die Siloentladerschaufel (100) in eine Ladeposition gekippt ist, und einer Schließposition beweglich ist, in der es zu der Mulde (Bn) hin geklappt ist, um seinen Inhalt in die Mulde (Bc) auszukippen, wobei die Siloentladerschaufel (100) in eine Transportposition gekippt ist.

2. Siloentladerschaufel (100) nach Anspruch 1, **dadurch gekennzeichnet, dass** das Gestell (Bc) eine Querzwischenwand (Pi) umfasst und dass das Trenn- und Auskippmittel (Msd) eine Vorderwand (Pf) aufweist, die quer und gelenkig auf der Höhe der oberen Längsrandkante der Querzwischenwand (Pi) montiert ist, wobei die untere Längsrandkante der Querzwischenwand (Pi) eine Säge (Sc2) trägt, die das Sägeglied (Os) darstellt.

3. Siloentladerschaufel (100) nach Anspruch 2, **dadurch gekennzeichnet, dass** die Vorderwand (Pf) aus einer Platte besteht, die im Querschnitt eine Kreisabschnittsgeometrie aufweist, deren Radius praktisch koaxial um die Gelenkachse (Ax2) des Gestells (Bc) in seiner offenen Aufnahmeposition zentriert ist.

4. Siloentladerschaufel (100) nach Anspruch 2, **dadurch gekennzeichnet, dass** die Vorderwand (Pf) aus einer Gabel besteht, deren Zinken mit einem Radius gekrümmt sind, der praktisch koaxial um die Gelenkachse (Ax2) des Gestells (Bc) in seiner offenen Aufnahmeposition zentriert ist, wobei die Zinken hinreichend nahe beieinanderliegen, um zu verhindern, dass abgeschnittenes Material durch die Gabel fällt.

5. Siloentladerschaufel (100) nach Anspruch 2, 3 oder 4, **dadurch gekennzeichnet, dass** die Querzwischenwand (Pi) an ihren beiden Enden senkrecht durch zwei Seitenwände (Pl1, Pl2) verlängert ist, die mit den beiden Armen (Br1, Br2) verbunden sind, und dass die beiden Seitenwände (Pl1, Pl2) an ihrer unteren Längsrandkante eine zweite Säge (Sc1) bzw. eine dritte Säge (Sc3) tragen, die die erste Säge (Sc2) an ihren beiden Enden verlängern, wobei die Gelenkachse (Ax) des Trenn- und Auskippmittels (Msd) zwischen den beiden Seitenwänden (Pl1, Pl2) gehalten ist.

6. Siloentladerschaufel (100) nach einem der Ansprüche 2 bis 5, **dadurch gekennzeichnet, dass** die Vorderwand (Pf) an ihren beiden lateralen Seiten durch zwei Backen (J1, J2) zum Führen des Materials begrenzt ist, die sich senkrecht zu der Vorderwand und in dieselbe Richtung erstrecken.

7. Siloentladerschaufel (100) nach einem der vorhergehenden Ansprüche, **dadurch gekennzeichnet, dass** sie einen Winkelanschlag (Rn, Ag) umfasst, der den Hub des Trenn- und Auskippmittels (Msd) zwischen seinen beiden erkennbar ausgeprägten Aufnahme- und Klapppositionen begrenzt.

8. Siloentladerschaufel (100) nach einem der vorhergehenden Ansprüche, **dadurch gekennzeichnet, dass** die Mulde (Bn) Seitenwände (P1, P2) und eine Bodenwand (P5) aufweist, wobei mindestens die eine (P2) der Seitenwände (P) von einer Entladeöffnung (Ot) durchquert wird, um das Entleeren ihres Inhalts zu gestatten, und dass ein Entlademittel (Md) gegen die Bodenwand (P5) angeordnet ist, um das in der Mulde (Bn) enthaltene Material durch die Entladeöffnung (Ot) auszuleeren.

9. Siloentladerschaufel (100) nach Anspruch 8, **dadurch gekennzeichnet, dass** die Mulde (Bn) eine Rückenwand (P3) aufweist und dass die Schaufel (100) einen Entmischungsrotor (Rt) umfasst, der an der Rückenwand und in der Nähe der Entladeöffnung (Ot) befestigt ist, um während seiner Drehung die Abgabemenge des Materials durch die Entladeöffnung zu regeln.

10. Siloentladerschaufel (100) nach einem der Ansprüche 5 bis 9, **dadurch gekennzeichnet, dass** sie ein an dem Trenn- und Auskippmittel (Msd) angehängtes Manövrierglied umfasst, um es um seine Gelenkachse (Ax) zwischen seiner Aufnahmeposition und seiner Klappposition kippen zu lassen.

## Claims

1. Silo unloader bucket (100) intended to be hitched to handling equipment for cutting material in a silo (Sl) or slicing a bale (Bt) of forage and loading it in order to transport it, comprising:
- a loading bin (Bn) delimited by walls, a loading opening (Oc),
- a C-shaped cradle (Bc) borne by two arms (Br) that are mounted so as to be able to pivot on said bin against at least one manoeuvring member (Vr), in front of its loading opening (Oc),
- a sawing member (Os) for sawing the material or the bale (Bt), this member being attached below the cradle,
- a separating and discharging means (Msd) that is mounted transversely and on the opposite side from the sawing member (Os), **characterized in that** the separating and discharging means (Msd) is mounted in articulated fashion on the cradle (Bc) and **in that** the separating and discharging means (Msd) is able to move between an open collecting position in order to slide along the cutting face in the silo (Sl) or in the bale (Bt) and to collect, on the side of the bin (Bn), a slice of material cut by the sawing member (Os), the silo unloader bucket (100) being tipped into a loading position, and a closed position in which it is tipped back towards the bin (Bn) in order to discharge its contents into the bin (Bc), the silo unloader bucket (100) being tipped into a transport position.

2. Silo unloader bucket (100) according to Claim 1, **characterized in that** the cradle (Bc) comprises a transverse intermediate wall (Pi), and **in that** the separating and discharging means (Msd) comprises a frontal wall (Pf) mounted transversely and in articulated fashion at the upper longitudinal edge of said transverse intermediate wall (Pi), the lower longitudinal edge of said transverse intermediate wall (Pi) bearing a saw (Sc2) that constitutes the sawing member (Os).

3. Silo unloader bucket (100) according to Claim 2, **characterized in that** the frontal wall (Pf) consists of a plate whose cross section is in the shape of a portion of a circle whose radius is centred practically coaxially around the axis of articulation (Ax2) of the cradle (Bc), in its open collecting position.

4. Silo unloader bucket (100) according to Claim 2, **characterized in that** the frontal wall (Pf) consists of a fork whose tines are curved according to a radius centred practically coaxially around the axis of articulation (Ax2) of the cradle (Bc), in its open collecting position, the tines being close enough to prevent the cut material from passing through said fork.

5. Silo unloader bucket (100) according to Claim 2, 3 or 4, **characterized in that** the transverse intermediate wall (Pi) is extended in perpendicular fashion at its two ends by two lateral walls (Pl1, P12) that are connected to the two arms (Br1, Br2), and **in that** the two lateral walls (P11, P12) respectively bear, on their lower longitudinal edge, a second saw (Sc1), a third saw (Sc3), extending the first saw (Sc2) at its two ends, the axis (Ax) of articulation of the separating and discharging means (Msd) being held between the two lateral walls (P11, P12).

6. Silo unloader bucket (100) according to any one of Claims 2 to 5, **characterized in that** the frontal wall (Pf) is bounded, on its two lateral sides, by two cheeks (J1, J2) for guiding the material, which extend perpendicular to said frontal wall and in the same direction.

7. Silo unloader bucket (100) according to any one of the preceding claims, **characterized in that** it comprises an angular stop (Rn, Ag) that limits the travel of the separating and discharging means (Msd) between its two noteworthy collecting and tipped-back positions.

8. Silo unloader bucket (100) according to any one of the preceding claims, **characterized in that** the bin (Bn) comprises lateral walls (P1, P2), a bottom wall (P5), at least one, (P2), of the lateral walls (P) has passing through it an unloading opening (Ot) by means of which its contents can be emptied, and **in that** an unloading means (Md) is arranged against the bottom wall (P5) in order to evacuate the material contained in the bin (Bn), through the unloading opening (Ot).

9. Silo unloader bucket (100) according to Claim 8, **characterized in that** the bin (Bn) comprises a dorsal wall (P3) and **in that** the bucket (100) comprises a separating rotor (Rt) fastened on said dorsal wall and close to the unloading opening (Ot) for the purpose of regulating, as it rotates, the rate of distribution of the material through said unloading opening.

10. Silo unloader bucket (100) according to any one of Claims 5 to 9, **characterized in that** it comprises a manoeuvring member hitched to the separating and discharging means (Msd) in order to make it tip about its axis (Ax) of articulation, between its collecting position and its tipped-back position.
